# EUROPEAN PATENT APPLICATION

(11) **EP 4 365 469 A1**
(43) Date of publication of application: **08.05.2024**
(21) Application number: 22831553.7
(22) Date of filing: 26.05.2022
(51) Int. Cl.: F16K 31/08

(54) **STATOR ASSEMBLY AND ELECTRONIC EXPANSION VALVE HAVING SAME**

(30) Priority: 29.06.2021 CN 202121465503 U
(71) Applicant: Zhejiang Dunan Artificial Environment Co., Ltd., Shaoxing, Zhejiang 311835 (CN)
(72) Inventor: FENG, Zhongbo, Shaoxing, Zhejiang 311835 (CN); SONG, Zhiguo, Shaoxing, Zhejiang 311835 (CN); WANG, Fugang, Shaoxing, Zhejiang 311835 (CN); JIN, Ju, Shaoxing, Zhejiang 311835 (CN)
(74) Representative: V.O.
(86) International application number: PCT/CN2022/095333
(87) International publication number: WO 2023/273730

(57) **Abstract**

Disclosed is a stator assembly, including: a housing (10), wherein the housing (10) has an accommodating cavity (11), and a bottom surface of the housing (10) is provided with an accommodating groove (12); a stator (20), disposed at a bottom of the housing (10), wherein a middle of the stator (20) is of a hollow structure, and the hollow structure is disposed corresponding to the accommodating groove (12); a circuit board (30), disposed in the accommodating cavity (11), wherein the circuit board (30) is electrically connected with the stator (20) by a contact pin (40); and a sensor (50), disposed in the accommodating cavity (11), wherein the sensor(50) is electrically connected with the stator (20), and the sensor (50) is located on a side of the circuit board that is away from the stator (20). Further disclosed is an electronic expansion valve including the stator assembly. The problem of large processing difficulty of the electronic expansion valve in the prior art can be solved.

## Description

### Cross-Reference to Related Application

The present invention claims the priority of Chinese Patent Application 202121465503.8, filed in the China Patent Office on June 29, 2021, and entitled "Stator Assembly and Electronic Expansion Valve with Stator Assembly ", the entire contents of which are herein incorporated by reference.

### Technical Field

The present invention relates to a technical field of electronic expansion valves, and in particular, to a stator assembly and an electronic expansion valve with the stator assembly.

### Background

At present, an existing electronic expansion valve includes a permanent magnet, a stator, a circuit board, and a sensor element. Specifically, the sensor element is disposed below the circuit board, the sensor element is electrically connected with the circuit board, the stator is disposed below the sensor element, and a contact pin on the stator is connected with the circuit board. In the above structure, a length of the contact pin for connecting the stator with the circuit board is too long, which increases a production difficulty and easily leads to a connection failure of the stator and the circuit board, thus affecting a normal use of the electronic expansion valve.

### Summary

Some embodiments of the present invention provide a stator assembly and an electronic expansion valve with the stator assembly, so as to solve the problem of large processing difficulty of the electronic expansion valve in an art known to inventors.

According to one aspect of the present invention, provided is a stator assembly. The stator assembly includes: a housing, wherein the housing has an accommodating cavity, and a bottom surface of the housing is provided with an accommodating groove; a stator, disposed at a bottom of the housing, wherein a middle of the stator is of a hollow structure, and the hollow structure is disposed corresponding to the accommodating groove; a circuit board, disposed in the accommodating cavity, wherein the circuit board is electrically connected with the stator by a contact pin; and a sensor, disposed in the accommodating cavity, wherein the sensor is electrically connected with the stator, and the sensor is located on a side of the circuit board that is away from the stator. By the above design, a distance between the circuit board and the stator in a vertical direction is effectively reduced, thereby reducing a length of the contact pin and improving the stability of the electrical connection between the circuit board and the stator.

Further, a plurality of components are disposed on the circuit board, and the sensor is located on the same side of the circuit board as a component having a height greater than 1 mm. In this way, not only the installation of the sensor and the components is facilitated, but an integration level of the circuit board is also improved. Moreover, an overall thickness of the circuit board can be reduced as much as possible, thereby reducing the space occupation of the circuit board.

Further, the sensor is a Hall sensor. The sensor has the advantages of high sensitivity, small volume and the like, thereby greatly reducing a required space in the installation process, and also facilitating signal reception.

Further, a mounting portion is disposed outside the sensor, and the mounting portion is fixedly connected with the circuit board. By the above settings, the sensor can be indirectly connected with the circuit board, so that the sensor can receive and feed back a signal in time, and thus the operation of an apparatus is more stable.

Further, the stator includes: a shell, located below the housing and connected with the housing, wherein the shell is disposed corresponding to the accommodating groove; a framework, disposed in the shell; and a coil, wound on the framework, wherein the coil is electrically connected with the circuit board by the contact pin. After the coil is energized, a magnetic field is formed around the stator, and the corresponding assembly is driven to rotate under the action of a magnetic field force, thereby achieving the effect of controlling the electronic expansion valve.

Further, the stator assembly further includes a sealant layer, disposed in the accommodating cavity, wherein the circuit board and the sensor are located inside the sealant layer. By the above structure, the circuit board and the sensor can be sealed together, thereby avoiding a damage to the components due to external environment interference after installation, and thus prolonging the service life of the apparatus.

Further, a thickness of the sealant layer is less than 8mm. Such a design not only facilitates the sealing of the circuit board and the sensor, but also correspondingly reduces the production cost.

Further, an interval between the circuit board and an accommodating cavity bottom wall is less than or equal to 1mm. In this way, the length of the required contact pin is further reduced, the installation of the circuit board is better facilitated, and the stability of the installed circuit board is further improved.

According to another aspect of the present invention, provided is an electronic expansion valve. The electronic expansion valve includes the above stator assembly, wherein the electronic expansion valve further includes: a valve body, wherein the valve body is disposed in the accommodating groove and the hollow structure of the stator assembly in a penetrating manner; a permanent magnet, rotatably disposed in the valve body, wherein the permanent magnet is disposed corresponding to the hollow structure; a valve core assembly, movably disposed in the valve body; and a transmission mechanism, disposed in the valve body, wherein the permanent magnet drives the valve core assembly to move by the transmission mechanism. By the movement of the valve core assembly, the opening or closing of the electronic expansion valve can be controlled.

Further, the sensor at least partially overlaps with the permanent magnet in an axial projection direction. In this way, it can be ensured that the sensor is able to stably receive the signal in the operation process of the apparatus, thereby facilitating the control of the apparatus.

By applying the technical solutions of the present invention, the sensor is disposed on the side of the circuit board that is away from the stator, so that the distance between the circuit board and the stator in the vertical direction is effectively reduced, thereby reducing the height of the contact pin, reducing the processing difficulty, improving the stability of connecting the circuit board and the stator, and meanwhile, improving the efficiency during installation.

### Brief Description of the Drawings

The drawings, which constitute a part of the present invention, are used to provide a further understanding of the present invention, and schematic embodiments of the present invention and descriptions thereof are used to explain the present invention, but do not constitute improper limitations on the present invention. In the drawings:
Fig. 1 illustrates a schematic structural diagram of a stator assembly provided in the present invention; and
Fig. 2 illustrates a schematic structural diagram of an electronic expansion valve provided in the present invention.

The drawings include the following reference signs:
10, housing; 11, accommodating cavity; 111, accommodating cavity bottom wall; 12, accommodating groove; 20, stator; 21, shell; 22, framework; 23, coil; 30, circuit board; 40, contact pin; 50, sensor; 51, mounting portion; 60, valve body; 70, permanent magnet; 80, valve core assembly.

### Detailed Description of the Embodiments

A clear and complete description of technical solutions in the embodiments of the present invention will be given below, in combination with the drawings in the embodiments of the present invention. Apparently, the embodiments described below are merely a part, but not all, of the embodiments of the present invention. The following description of at least one exemplary embodiment is merely illustrative in nature and is in no way intended as any limitation on the present invention and its application or use. All of other embodiments, obtained by those ordinary skilled in the art based on the embodiments in the present invention without any creative effort, fall into the protection scope of the present invention.

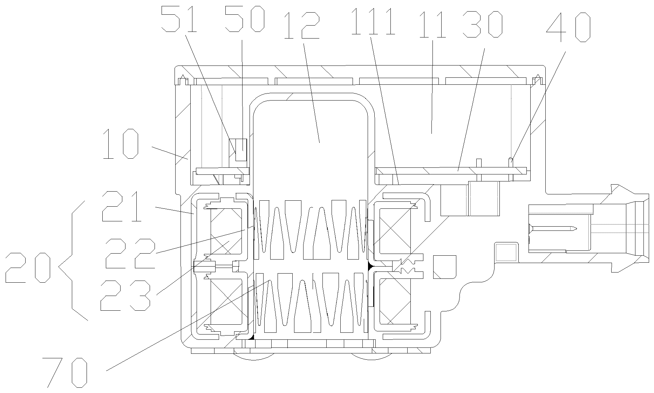

As shown in Fig. 1, an embodiment of the present invention provides a stator assembly, including: a housing 10, a stator 20, a circuit board 30 and a sensor 50, wherein the housing 10 has an accommodating cavity 11, and a bottom surface of the housing 10 is provided with an accommodating groove 12. The stator 20 is disposed at a bottom of the housing 10, a middle of the stator 20 is of a hollow structure, and the hollow structure is disposed corresponding to the accommodating groove 12. The circuit board 30 is disposed in the accommodating cavity 11, the circuit board 30 is electrically connected with the stator 20 by a contact pin 40. The sensor 50 is disposed in the accommodating cavity 12, the sensor 50 is electrically connected with the stator 20, and the sensor 50 is located on the side of the circuit board 30 away from the stator 20. By the above design, a distance between the circuit board 30 and the stator 20 in a vertical direction is effectively reduced, thereby reducing a length of the contact pin 40 and improving the stability of the electrical connection between the circuit board 30 and the stator 20.

By the technical solutions provided in some embodiments of the present invention, the sensor 50 is disposed on the side of the circuit board 30 that is away from the stator 20, so that the distance between the circuit board 30 and the stator 20 in the vertical direction is effectively reduced, thereby reducing the height of the contact pin 40, reducing the production cost, and meanwhile, improving the efficiency during installation.

In some embodiments, a plurality of components is disposed on the circuit board 30, and the sensor 50 is located on the same side of the circuit board 30 as a component having a height greater than 1 mm. In this way, not only the installation of the sensor 50 and the components is facilitated, but the integration level of the circuit board 30 is also improved. Moreover, an overall thickness of the circuit board 30 is reduced as much as possible, thereby reducing the space occupation of the circuit board 30.

In some embodiments, the sensor 50 is a Hall sensor. The sensor 50 has the advantages of high sensitivity, small volume and the like, thereby greatly reducing a required space in the installation process, and also facilitating signal reception.

In some embodiments, a mounting portion 51 is disposed outside the sensor, and the mounting portion 51 is fixedly connected with the circuit board 30. By the above settings, the sensor 50 can be indirectly connected with the circuit board 30, so that the sensor 50 can receive and feed back a signal in time, and thus the operation of an apparatus is more stable.

Specifically, the stator 20 includes: a shell 21, a framework 22 and a coil 23, wherein the shell 21 is located below the housing 10, the shell 21 is connected with the housing 10, and the shell 21 is disposed corresponding to the accommodating groove 12 for abutting and connecting; the framework 22 is disposed in a periphery of the shell 21; and the coil 23 is wound on the framework 22 for supporting, the coil 23 is electrically connected with the circuit board 30 by the contact pin 40. After the coil 23 is energized, a magnetic field is formed around the stator 20, and the corresponding assembly is driven to rotate under the action of a magnetic field force, thereby achieving the effect of controlling the electronic expansion valve.

In some embodiments, the stator assembly further includes a sealant layer, wherein the sealant layer is disposed in the accommodating cavity 11, and the circuit board 30 and the sensor 50 are located inside the sealant layer. By the above structure, the circuit board 30 and the sensor 50 can be sealed together, thereby avoiding a problem that the components are damaged due to external environment interference after installation, and thus prolonging a service life of the apparatus.

In the embodiment of the present invention, the circuit board 30 is disposed below the sensor 50, thereby reducing the length of the contact pin 40 for connecting the stator 20 and the circuit board 30, thus reducing a space area formed by the circuit board 30 and the contact pin 40, and further reducing the thickness of the sealant layer. By the above design, not only the required production cost is reduced, but the assembly of the apparatus is also facilitated, and the installation efficiency is improved. In other embodiments, when the stator 20 and the housing 10 are reliably sealed, the sealant layer may also be canceled, so that the production cost can be further reduced, meanwhile, the installation working duration is also shortened, and thus the assembly efficiency is further improved.

In some embodiments, the thickness of the sealant layer is less than 8mm. Such a design not only facilitates the sealing of the circuit board 30 and the sensor 50, but also correspondingly reduces the production cost.

In some embodiments, an interval between the circuit board 30 and an accommodating cavity bottom wall 11 is less than or equal to 1mm. In this way, the length of the required contact pin 40 is further reduced, the installation of the circuit board 30 is better facilitated, and the stability of the installed circuit board 30 is further improved.

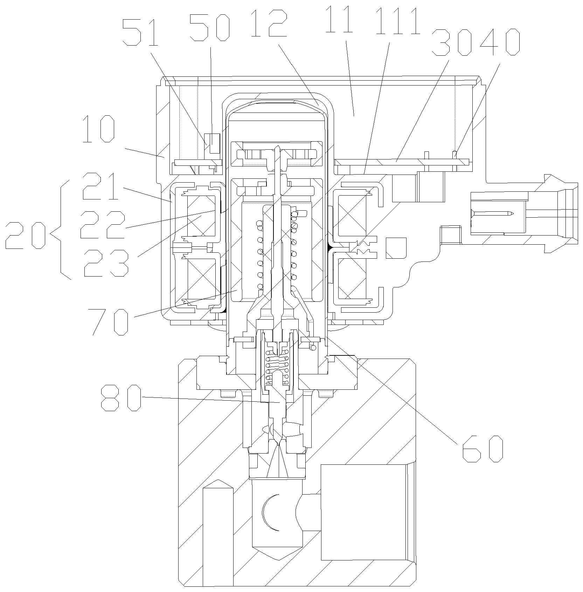

As shown in Fig. 2, another embodiment of the present invention provides an electronic expansion valve, and the electronic expansion valve includes the above stator assembly. The electronic expansion valve further includes a valve body 60, a permanent magnet 70, a valve core assembly 80, and a transmission mechanism, wherein the valve body 60 is disposed in the accommodating groove 12 and the hollow structure of the stator assembly in a penetrating manner. The permanent magnet 70 is rotatably disposed in the valve body 60, and the permanent magnet 70 is disposed corresponding to the hollow structure. The valve core assembly 80 is movably disposed in the valve body 60. The transmission mechanism is disposed in the valve body 60, and the permanent magnet 70 drives the valve core assembly 80 to move by the transmission mechanism. By the movement of the valve core assembly 80, the opening or closing of the electronic expansion valve can be controlled.

In some embodiments, the sensor 50 at least partially overlaps with the permanent magnet 70 in an axial projection direction. In this way, it can be ensured that the sensor 50 can stably receive the signal in the operation process of the apparatus, thereby facilitating the control of the apparatus.

By the technical solutions provided in some embodiments of the present invention, the sensor 50 is disposed on the side of the circuit board 30 that is away from the stator 20, so that the distance between the circuit board 30 and the stator 20 in the vertical direction is effectively reduced, thereby reducing the height of the contact pin 40, improving the stability of the electrical connection between the circuit board 30 and the stator 20, and meanwhile, reducing the space area formed by the circuit board 30 and the contact pin 40, such that the thickness of the sealant layer can be reduced. By means of the above design, not only the required production cost is reduced, but the assembly of the apparatus is facilitated, and the installation efficiency is improved.

It should be noted that, terms used herein are for the purpose of describing specific embodiments, and are not intended to limit the exemplary embodiments according to the present invention. As used herein, unless the context clearly dictates otherwise, a singular form is intended to include a plural form as well. In addition, it should also be understood that, when the terms "contain" and/or "include" are used in the present specification, they indicate that the presence of features, steps, operations, devices, components and/or combinations thereof.

Unless specifically stated otherwise, relative arrangements, numerical expressions and numerical values of components and steps set forth in these embodiments do not limit the scope of the present invention. Meanwhile, it should be understood that, for the convenience of description, the dimensions of various portions shown in the drawings are not drawn according to an actual proportional relationship. Techniques, methods and devices known to those ordinary skilled in related art may not be discussed in detail, but where appropriate, such techniques, methods and devices should be considered as a part of the authorized specification. In all examples shown and discussed herein, any specific value should be construed as illustrative only and not as restrictive. Accordingly, other examples of the exemplary embodiments may have different values. It should be noted that similar reference signs and letters refer to similar items in the following figures, so once a certain item is defined in one figure, it does not require further discussion in subsequent figures.

In the description of the present invention, it should be understood that orientation or position relationships indicated by orientation words such as "front, back, upper, lower, left, right", "transverse, longitudinal, vertical, horizontal" and "top, bottom" and the like are generally orientation or position relationships shown on the basis of the drawings, and are merely for the convenience of describing the present invention and simplifying the description, in the absence of opposite statement, these orientation words do not indicate or imply that the referred apparatuses or elements must have specific orientations or must be constructed and operated in specific orientations, and thus cannot be construed as limiting the protection scope of the present invention; and the orientation words "inside and outside" refer to the inside and outside of the contours of the components themselves.

For the convenience of description, spatially relative terms, such as "on", "above", "on the surface", "over" and the like, may be used herein to describe spatial position relationships between one device or feature and other devices or features shown in the figures. It should be understood that, the spatially relative terms are intended to contain different orientations of the device in use or operation in addition to the orientations described in the figures. For example, if the device in the figures is turned over, the device, which is described as "above other devices or structures" or "over other devices or structures" would then be positioned as "below other devices or structures" or "beneath other devices or structures". Thus, the exemplary term "above" may include both orientations of "above" and "below". The device may also be otherwise positioned (rotated by 90 degrees or at other orientations), and the spatially relative descriptions used herein are interpreted accordingly.

In addition, it should be noted that the terms "first", "second" and the like are used for defining components and parts, and are merely for the convenience of distinguishing the corresponding components and parts, and unless otherwise stated, the above words have no special meaning, and thus cannot be construed as limiting the protection scope of the present invention.

The above descriptions are only some embodiments of the present invention, and are not intended to limit the present invention. For those skilled in the art, the present invention may have various modifications and changes. Any modifications, equivalent replacements, improvements and the like, made within the spirit and principle of the present invention, shall be included within the protection scope of the present invention.

## Claims

1. A stator assembly, wherein the stator assembly comprises:
a housing (10), wherein the housing (10) has an accommodating cavity (11), and a bottom surface of the housing (10) is provided with an accommodating groove (12);
a stator (20), disposed at a bottom of the housing (10), wherein a middle of the stator (20) is of a hollow structure, and the hollow structure corresponds to the accommodating groove (12);
a circuit board (30), disposed in the accommodating cavity (11), wherein the circuit board (30) is electrically connected with the stator (20) by a contact pin (40); and
a sensor (50), disposed in the accommodating cavity (11), wherein the sensor (50) is electrically connected with the stator (20), and the sensor (50) is located on a side of the circuit board (30) that is away from the stator (20).

2. The stator assembly according to claim 1, wherein a plurality of components are disposed on the circuit board (30), and the sensor (50) is located on a same side of the circuit board (30) as a component having a height greater than 1 mm.

3. The stator assembly according to claim 2, wherein the sensor (50) is a Hall sensor.

4. The stator assembly according to claim 2, wherein a mounting portion (51) is disposed outside the sensor (50), and the mounting portion (51) is fixedly connected with the circuit board (30).

5. The stator assembly according to claim 2, wherein the stator (20) comprises:
a shell (21), located below the housing (10) and connected with the housing (10), wherein the shell (21) is disposed corresponding to the accommodating groove (12);
a framework (22), disposed in the shell (21); and
a coil (23), wound on the framework (22), wherein the coil (23) is electrically connected with the circuit board (30) by the contact pin (40).

6. The stator assembly according to claim 1, wherein the stator assembly further comprises:
a sealant layer, disposed in the accommodating cavity (11), wherein the circuit board (30) and the sensor (50) are located inside the sealant layer.

7. The stator assembly according to claim 6, wherein the thickness of the sealant layer is less than 8mm.

8. The stator assembly according to claim 1, wherein an interval between the circuit board (30) and an accommodating cavity bottom wall (111) is less than or equal to 1mm.

9. An electronic expansion valve, wherein the electronic expansion valve comprises the stator assembly according to any one of claims 1-8, and the electronic expansion valve further comprises:
a valve body (60), disposed in the accommodating groove (12) and the hollow structure of the stator assembly in a penetrating manner;
a permanent magnet (70), rotatably disposed in the valve body (60), wherein the permanent magnet (70) is disposed corresponding to the hollow structure;
a valve core assembly (80), movably disposed in the valve body (60); and
a transmission mechanism, disposed in the valve body (60), wherein the permanent magnet (70) drives the valve core assembly (80) to move by the transmission mechanism.

10. The electronic expansion valve according to claim 9, wherein the sensor (50) of the stator assembly at least partially overlaps with the permanent magnet (70) in an axial projection direction.
